# EUROPEAN PATENT SPECIFICATION

(11) **EP 0 614 195 B1**
(45) Date of publication and mention of the grant of the patent: **21.04.1999**
(21) Application number: 94301368.0
(22) Date of filing: 25.02.1994
(51) Int. Cl.: G21C 3/07

(54) **Fret resistant fuel rod with zirconium oxide layer**
Reibkorrosionbeständiger Brennstab mit Zirkonoxyd-Schicht
Barreau combustible ayant une couche d'oxyde de zirconium pour résister à la corrosion par frottement

(30) Priority: 02.03.1993 US 25361
(43) Date of publication of application: 07.09.1994
(73) Proprietor: WESTINGHOUSE ELECTRIC CORPORATION, Pittsburgh, Pennsylvania 15222 (US)
(72) Inventor: Nayak, Umesh P., Murrysville, PA 15668 (US); Goldenfield, Mark Philip, Columbia, SC 29223 (US); Roberts, Elwyn, Lugoff, SC 29078 (US); King, Stephen J., Columbia, SC 29223 (US); Comstock, Robert John, Irwin, PA 15642 (US); Filippi, Arthur Mario, Pittsburgh, PA 15216 (US); Lambert, David Vincent, St Matthews, SC 29135 (US)
(74) Representative: van Berlyn, Ronald Gilbert

(56) References cited:
- WO-A-92/09716
- FR-A- 2 607 616
- GB-A- 1 306 939
- US-A- 5 171 520
- DATABASE WPI Week 8736, Derwent Publications Ltd., London, GB; AN 87-254940 & JP-A-62 177 489 (TOSHIBA) 4 August 1987

## Description

The invention relates to the field of nuclear fuel rod structures. In particular, the invention involves application of a hard, dense and wear-resistant layer of zirconium oxide (ZrO₂) to a zirconium-based alloy fuel cladding for improving resistance to fretting caused by debris lodged in a nuclear fuel assembly. The ZrO₂ layer is thermally grown in situ along at least the end portion of the fuel rod at and adjacent the lower grid of the fuel assembly and substantially reduces fretting damage.

Fuel reliability is among the highest priorities in operation of a pressurized water nuclear power plant. In such a plant, coolant water is heated in a pressure vessel disposed along a primary coolant circuit by nuclear fuel in the form of elongated fuel rods arranged in vertical arrays in fuel assemblies. Each fuel rod comprises cylindrical pellets of enriched uranium stacked in a hollow tube typically made of a zirconium alloy. The fuel rods are grouped in fuel assembly structures that enable a number of the fuel rods to be handled as a unit. The fuel assemblies are mounted in the reactor vessel with the fuel rods elongated vertically and closely spaced. The fuel rods produce heat with nuclear fission at a rate that is controlled via neutron absorbing control rods that are inserted or removed from positions in the fuel assemblies. The fuel rods heat the primary coolant, producing a vigorous and turbulent upward flow of the coolant over the fuel rods due to convection.

The fuel rod cladding material is typically a zirconium alloy such as Zircaloy. Zirconium is particularly useful because of its ready availability, good ductility, resistance to radiation damage, low thermal-neutron absorption cross section, and excellent corrosion resistance in pressurized water up to 350°C. Zirconium is a highly active metal that, like aluminum, seems passive because a stable and cohesive thin oxide film forms on the surface in the presence of air or water.

The oxide film chemically protects the zirconium metal. In the event of mechanical damage, oxide forms in the damaged area, provided oxygen is present to sustain the reaction. In US Patent 4,100,020 - Andrews, a nuclear fuel rod is provided with a coating of a transition metal oxide on the inside of the fuel rod cladding tube. During operation of the power plant, thermal expansion of the fuel pellets and chemical reaction with iodine released by the fuel, tend to wear the inner surface of the tube. The transition metal oxide releases oxygen to ensure that oxygen will remain available during the useful life of the fuel rod to re-form the protective ZrO₂ coating. Other disclosures relating to the formation of an oxide layer on the inside of a zirconium cladding tube include US Patents 4,609,524 - Ferrari and 4,233,086 - Vesterlund.

These and other techniques help to extend the life of the fuel rods by protecting their inner surfaces from mechanical damage from the fuel pellets and chemical attack, particularly from iodine. However, in practical experience, the dominant failure mechanism of nuclear fuel rods of this type is leakage of the fuel rod tubes caused by fretting due to loose metallic debris that wears on the outside of the fuel rod. Metallic debris is typically introduced into the primary coolant circuit during maintenance operations on the reactor coolant system. The loose debris can circulate in the coolant system and become trapped in the fuel assemblies. With the turbulent flow of coolant, the debris vibrates against the outer surfaces of the fuel rods and frets or erodes over time by mechanical impact, through the zirconium-based alloy of the cladding. A breach of the cladding of the fuel rod allows release of radioactive fission products into the coolant stream. When the fuel needs to be removed and replaced, this previous release of radioactive material increases the possibility of exposure of personnel to radioactivity.

The fuel assemblies support the fuel rods by means of a series of spaced panels or grids, connected by thimble tubes running parallel to the fuel rods. The grids have resilient structures bearing against the fuel rods, and otherwise are open to allow the coolant to flow through the fuel assembly. The top and bottom end panels of the fuel assembly are known as nozzles and also are structured to allow coolant to flow through the fuel assembly. It is known to provide the bottom nozzle with small holes as a means to filter out any debris that is larger than the diameter of the holes from entering the fuel assembly. The holes are sized to maximize the tradeoff between effectiveness of the bottom nozzle as a debris filter and the resistance of the bottom nozzle to flow of the coolant. The bottom nozzle prevents large debris that potentially could cause substantial damage to the fuel rods from entering the fuel assembly. However, smaller debris can pass through the bottom nozzle. It is not advantageous to reduce the size of the holes in the bottom nozzle further and thereby filter smaller debris from the coolant, due to the additional resistance to flow of the coolant. Therefore, debris resistant bottom nozzle structures cannot completely eliminate the problem of fretting damage to the fuel rods.

Debris that is small enough to pass through the bottom nozzle may be blocked by or lodged in the grids supporting the fuel rods. Whereas the debris is captured at and below the lowermost grid supporting the fuel rods, the turbulent coolant flow agitates the debris and frets against the fuel rod cladding.

It would be advantageous to improve the durability of the outside of the cladding tube such that fretting damage is minimized. It is known to coat a fuel rod with a distinct plating of metal over the full length of the zirconium alloy of the tube, for example as disclosed in US-A-5,073,336. Such a plating is helpful for protection but complicates manufacturing and does not take optimal advantage of the low neutron absorption properties available from the zirconium alloy itself.

Reference is also made to prior art document WO 92/09716 which discloses a method for improving fretting resistance of zirconium alloy components formed into a shape for use in a nuclear reactor. At least a portion of the outer surface of a component is reacted with material selected from the group consisting of carbon, nitrogen, oxygen and combinations of the foregoing to form a wear resistant layer on the surface of the component. The said document indicates that in the case of fuel rods for boiling water reactors the temperature at which the component is reacted with the said material may be as high as about 700°C. The said document further indicates that in the case of fuel rods for pressurized water reactors, the peak temperature should be limited to 500°C. The method disclosed in the said document includes providing a zirconium alloy component, reacting at least a portion of an outer surface of said component at about atmospheric pressure with a material selected from the group consisting of carbon compounds suitable for forming a carbide, cyano or carbonate compounds suitable for forming an oxide, air or oxygen for forming an oxide and combinations of the forgoing, at a temperature below 500°C to avoid changes in the metallurgical characteristics of the zirconium alloy component, the reaction producing a black wear resistant layer on said surface.

The present inventors have determined from evaluations of debris related fuel rod failures that most of the failures occur early in the first cycle of irradiation. Due to debris fretting, the failures typically occur at a point on the fuel rod below the location of the bottom grid. With heating during operation of the reactor, and in the presence of the water coolant, the surface of the fuel rod becomes increasingly oxidized, improving the resistance of the fuel rod to fretting damage over time. Therefore, according to the invention, the fuel rod is pre-oxidized in the critical area at and below the bottom grid, to provide preliminary additional protection to fretting damage. This is accomplished by heating in the presence of oxygen, according to the treatment processes disclosed in detail hereinafter.

It is an object of the invention to thicken the surface oxidation on the outside of a zirconium alloy fuel rod at particular areas subject to wear during early operation of the fuel rod, by localized heating in the presence of oxygen, before initial use of the fuel rod.

It is a further object of the invention to harden the surface of a zirconium alloy nuclear fuel rod by oxidizing the outer surface of the rod along a limited length adjacent the bottom grid of the fuel assembly, for improved protection against fretting damage due to debris captured at and below the bottom grid.

These and other objects are accomplished by preliminarily treating zirconium alloy nuclear fuel rods to form a thickened oxide layer to protect the outer surface of the rods against fretting damage due to debris captured by the fuel assembly and agitated against the fuel rod at and below the bottom supporting grid of the fuel assembly. This is accomplished by heating the rod in an oxygen containing atmosphere and thereby forming a thickened zirconium oxide (ZrO₂) surface layer between the bottom grid and the end of the fuel rod. The thicker portion can be 2 to 15 microns in thickness, extending 10.16 to 20.32 cm (four to eight inches) from the end of the tube, to a point at which the rod is supported by a receptacle in the bottom grid. The portion to be protected is heated to a temperature of 600 to 870°C (1100 to 1600°F) for up to one hour, for example by electromagnetic induction heating, furnace heating, electrical resistance heating and heating by application of laser radiation. The portion can be enclosed in a vessel during heating, in a gaseous environment with a gaseous pressure and/or oxygen concentration greater than normal atmospheric, or in oxygen with an inert gas.

There are shown in the drawings certain exemplary embodiments of the invention as presently preferred. It should be understood, however, that the invention is not limited to the precise arrangements mentioned as examples, and is capable of variation within the scope of the invention claimed. In the drawings :

FIGURE 1 is an elevation view showing a nuclear fuel assembly according to the invention, with a fret resistant fuel rod with zirconium oxide layer.

FIGURE 2 is a section view through one of the nuclear fuel rods, showing the protective oxide layer.

FIGURE 3 is a schematic illustration showing growing a protective oxide layer in atmospheric oxygen, using a furnace arrangement.

FIGURE 4 is a schematic illustration showing growing a protective oxide layer in non-atmospheric pressure and/or gas content conditions.

FIGURE 5 is a graph showing variations of treatment time and temperature for forming a protective oxide layer according to the invention for a Zircaloy-4 tube in air.

FIGURE 6 is a graph showing variations of treatment time and temperature for forming a protective oxide layer according to the invention for a Zirlo tube in air.

FIGURE 7 is a schematic illustration of electromagnetic induction heating according to the invention for forming the oxide layer.

FIGURE 8 is a schematic illustration of electrical resistance heating for forming the oxide layer.

FIGURE 9 is a schematic illustration showing forming the oxide layer by application of laser radiation.

According to the invention, debris-induced failure of a nuclear fuel rod 20 is inhibited by forming a thickened layer of zirconium oxide (ZrO₂) along the bottom four to eight inches of a fuel rod, i.e., in the area of the fuel rod 20 below the bottom grid 32 of the fuel assembly structure 34. This protective layer 24 is hard and dense, and is provided on the fuel rod 20 preliminarily, before the first cycle of irradiation. Together with a debris filtering bottom nozzle structure 36, this extra oxide thickness provides a high degree of protection against debris fretting damage leading to leakage of the nuclear fuel rods (20).

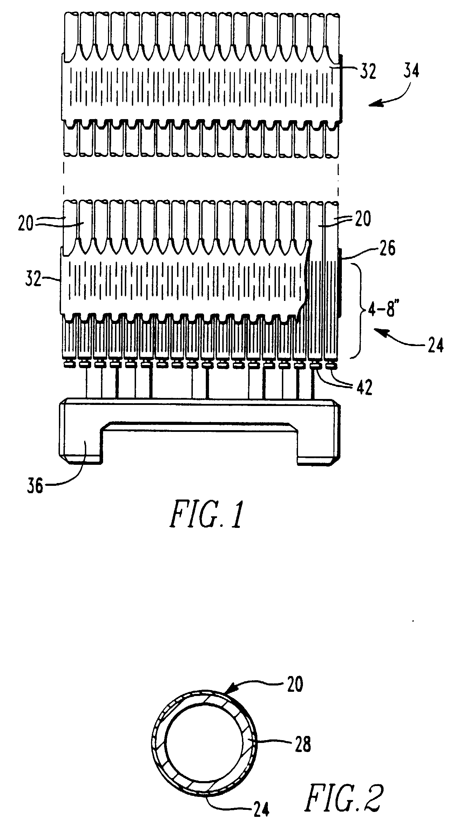

FIGURE 1 shows the lower area of a nuclear fuel assembly 34. The assembly 34 has a bottom nozzle 36 that is open to passage of the coolant in an upward direction. A number of supporting grids 32 support the fuel rods 20 and are disposed at a space from the nozzle 36. The grids 32 are generally open work frames attached to one another and to the top and bottom nozzles (only the bottom nozzle 36 being shown) by thimble tubes. The grids 32 have a plurality of receptacles for the rods 20, formed by bows in the sheet material of the grid, that hold the fuel rods 20 in closely spaced parallel vertical orientation. The grids 32 also allow coolant to flow through over the rods 20, however, the grids 32 also trap debris in the area of the rods 20, especially between the bottom nozzle 36 and the lowermost grid 32.

Each of the nuclear fuel rods 20 includes fissionable fuel in a cladding tube 28 defining an elongated hollow shaft of a zirconium alloy material such as Zircaloy or Zirlo. Zirconium oxidizes in air, and the cladding tube or hollow shaft 28 has a zirconium oxide surface coating 22. According to the invention, the oxide coating is thickened in the critical area between the bottom nozzle 36 and the lowermost grid 32. The coating 22 includes a portion 24 on an outer surface of the tube 28, adjacent the grid support position 26, which portion 24 is substantially thicker than the zirconium oxide surface coating 22 along the remaining length of the tube 28.

It is possible to form a thick protective oxide coating adjacent each of the grids 32. However, most problems with debris induced fretting occur at and below the bottom grid 32. Therefore, the portion 24 of zirconium oxide on the outer surface of the tube 28 that is substantially thicker preferably extends from the grid support position 26 of the bottom grid 32, to the bottom end of the tube 28, where an end plug 42 closes the tube and confines the nuclear fuel therein.

The pre-oxidation of the nuclear fuel rod 20 along this portion 24 is accomplished on a pickled, polished or as-manufactured zirconium based alloy tube or cladding 28, preferably that has been pre-welded with the end plug 42 at the bottom of the fuel rod 20.

The thickened ZrO₂ layer 24 can be grown by exposing the rod 20 to normal atmospheric gas concentrations (i.e., 20% oxygen and 80% nitrogen) and pressure. Alternatively, oxygen exposure can be raised, e.g., by using a mixture of oxygen and an inert gas such as argon or helium and elevated pressure. Time, temperature and concentration of oxygen exposure preferably are chosen to build up a protective layer 24 of at least 2 to 15 microns in thickness. The protective layer 24 is provided along the fuel rod 20 at and below the point 26 at which the rod will be carried by a grid 32 of the fuel assembly 34, in particular at and below the area of the bottom grid 32 or in the bottom 4 to 8 inches (10 to 20cm) of the fuel rod 20. The relative positions of the protective oxide layer 24, bottom grid 32 and bottom filtering nozzle 36 are shown in FIGURE 1, and the protective layer 24 is shown sectionally in FIGURE 2.

The heating can be accomplished in a variety of ways, including, for example, electromagnetic induction heating, furnace heating, electrical resistance heating and heating by application of laser radiation. Heating can be accomplished at increased gaseous pressure via an autoclave. The cladding 28 is heated to a temperature of 600 to 870°C (1,100 to 1,600°F) for up to one hour at atmospheric pressure and oxygen concentration, to provide a protective coating 24 as shown in FIGURE 2.

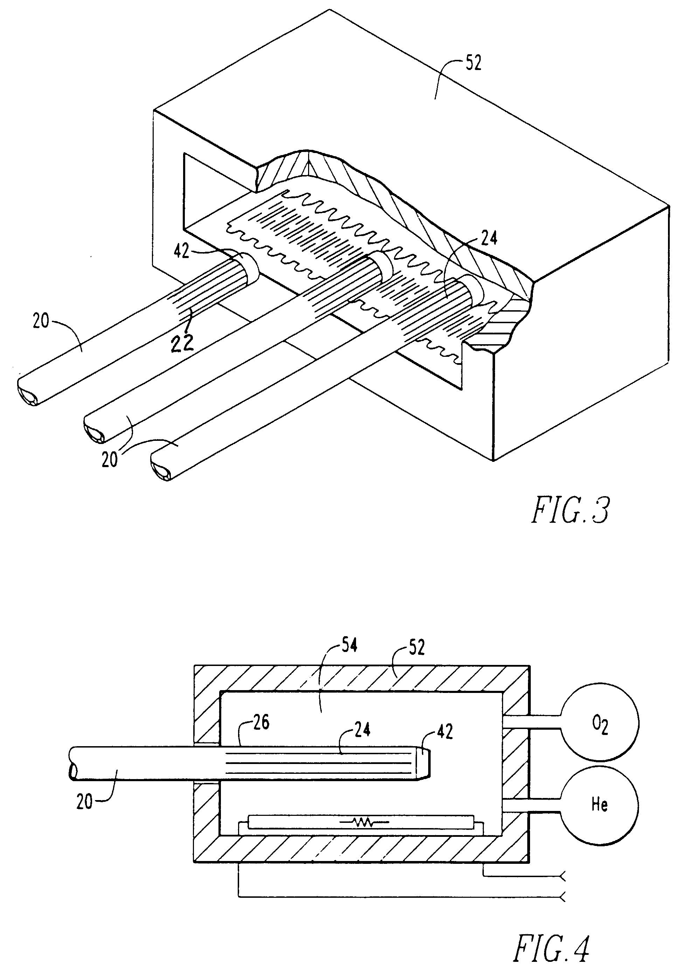

FIGURE 3 illustrates a furnace type heating arrangement. The bottom ends of the zirconium alloy fuel rods 20 to be treated are passed through a furnace 52 in normal atmospheric oxygen concentration. Each fuel rod 20 has its end plug 42 pre-welded. The rod 20 can be heated to a high temperature for a short time or to a lower temperature for a longer time in order to grow the zirconium oxide layer 22 to the required thickness in the area 24 of the rod 20 that will be disposed at and below the bottom grid 32 of the fuel assembly 34. The rods 20 to be treated by heating can be arranged on a support (not shown) such that their ends extend into the furnace 52, and moved laterally of their longitudinal extension and/or rolled during the process.

The atmosphere around the fuel rods 20 during heat treating must contain oxygen but the oxygen need not be at normal atmospheric gas concentrations and pressures. Increasing the concentration of oxygen and the gas pressure shortens the time needed to form the protective oxide layer 24. As shown in FIGURE 4, the rods 20 can be heated in a gaseous environment of oxygen and inert gas to form the thickened ZrO₂ layer 24. For heating the rods 20 in gaseous conditions other than normal atmospheric conditions, the rods 20 can be partly confined by the furnace 52 to form a vessel 54 that encompasses at least the ends of the rods 20 in the area 24 to be treated.

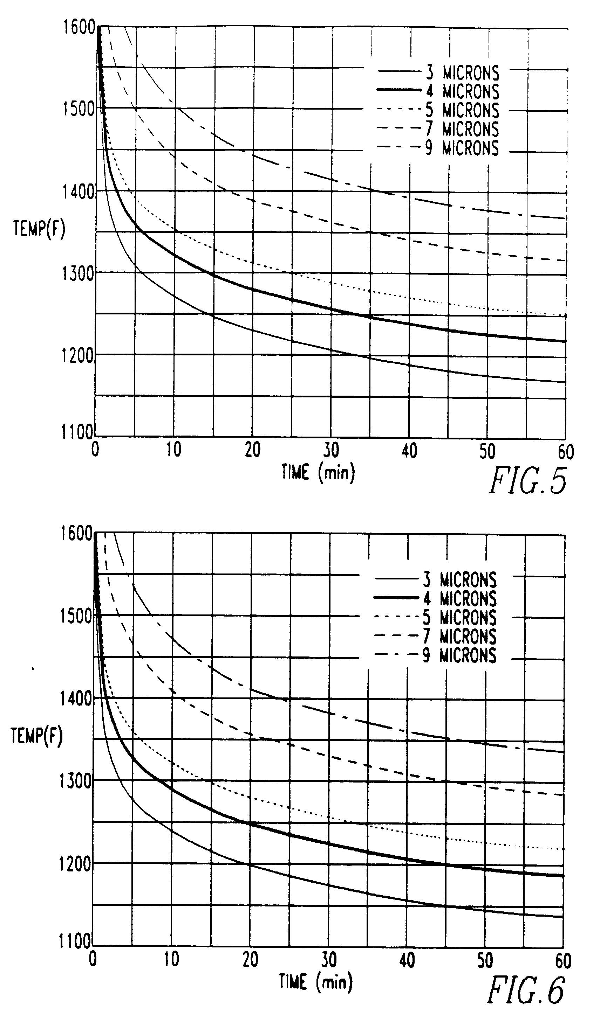

FIGURE 5 is a graph showing variations of treatment time and temperature as needed for forming a protective oxide layer 24 on a Zircaloy-4 tube 28 in air. FIGURE 6 is a corresponding graph showing the time and temperature needed for forming a protective oxide layer on a Zirlo tube in air. As shown in the graphs, the protective oxide layer 24 preferably is 3 to 9 microns in thickness, and can be formed by heating for the time and to the temperatures shown.

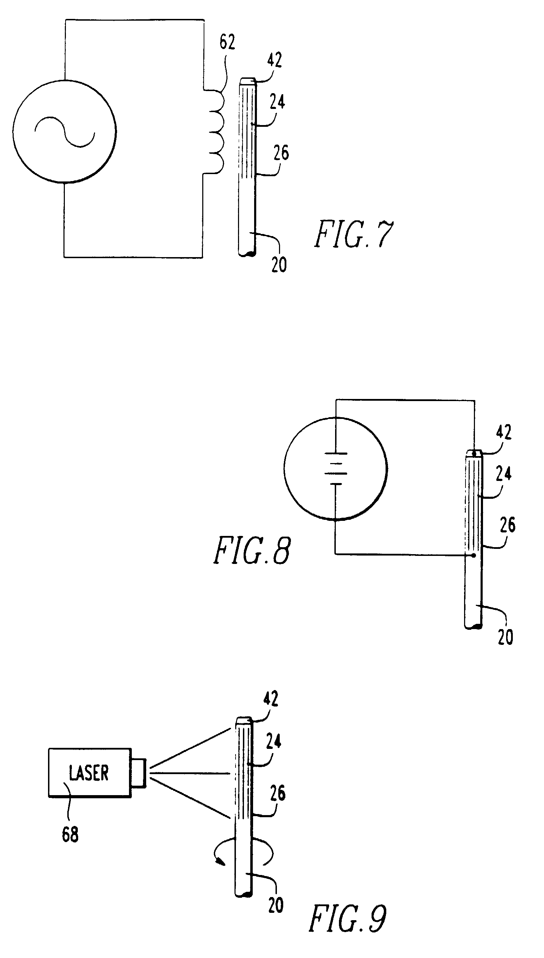

FIGURES 7-9 illustrate some alternative methods for heating the rods 20 in the area 24 to be treated. FIGURE 7 shows heating via electromagnetic induction. A current is induced in the zirconium alloy of the rod by applying an alternating current to a coil 62, and resistive heating from the induced current brings the rod 20 to a temperature at which the formation of the oxide layer is promoted.

Electrical resistance heating can also be employed more directly by attaching electrical conductors on either side of the zone 24, as shown in FIGURE 8. In that case, a high current, low voltage source 66 is coupled between the end 42 of the rod 20 and a point 26 on the rod that will reside in the fuel assembly 34 adjacent the bottom grid 32. The electric energy thus coupled to the rod 20 is dissipated as heat, for promoting oxidation. FIGURE 9 illustrates heating the rod 20 by laser radiation for forming the oxide layer. A CO₂ or Nd-YAG laser 68 can be scanned along the outer surface of the rod 20 to locally heat the zirconium alloy material and thus promote oxidation.

Referring again to FIGURE 1, the treated rod 20 is installed in the fuel assembly 34 such that the protectively oxidized end is disposed at and below the bottom grid 32 of the fuel assembly 34. Debris (not shown) that passes upwardly with the coolant through the bottom nozzle 36, which preferably is a debris filtering type, is captured between the bottom nozzle 36 and the bottom grid 32, or perhaps lodges in the bottom grid 32. The debris is agitated by the upward flow of coolant. The protective oxide layer 24 is hard and dense, and protects the zirconium alloy material from fretting damage, particularly during the early irradiation cycles of the fuel rod 20 before the outer surface of the rod 20 becomes generally oxidized by operational heating in the coolant water of the nuclear reactor, to a comparable oxidation thickness.

## Claims

1. A method for strengthening nuclear fuel rods (20) for a pressurized water reactor against fretting damage from debris, the fuel rods (20) to be mounted in a fuel assembly (34) having a supporting grid (32) with receptacles engaging the rods (20) at a rod support position (26) along the fuel rods (20), each of the fuel rods (20) carrying fissionable fuel in a cladding tube defining an elongated hollow shaft (28) comprising a zirconium alloy, the fuel assembly (34) supporting the rods (20) parallel to one another and elongated in a direction of coolant flow, the method comprising:
forming a zirconium oxide surface coating (22) on an outer surface of the tube (28), including a portion (24) on the outer surface of the tube (28), in an area of the grid support position (26), that is substantially thicker than the zirconium oxide surface coating (22) along a remaining length of the tube (28), whereby the tube (28) is strengthened against impact from the debris adjacent the grid support position (26), and wherein said forming step comprises heating said length of the tube (28) for up to one hour in an atmosphere containing oxygen, at a temperature of 600 to 870°C (1100 to 1600°F).

2. A method as claimed in claim 1, comprising forming the thicker portion (24) on the outer surface of the tube (20) along a length extending from the grid support position (26) to an end (42) of the tube (28).

3. A method as claimed in claim 1 or 2, comprising forming the thicker portion (24) to a thickness of 2 to 15 microns.

4. A method as claimed in claim 2, comprising forming the thicker portion (24) over a length of 10.16 to 20.32 cm (four to eight inches) between the grid support position (26) and the end (42) of the tube (20).

5. A method as claimed in any of claims 1 to 4, wherein said heating is accomplished by at least one of electromagnetic induction heating, furnace heating, electrical resistance heating and heating by application of laser radiation.

6. A method as claimed in any one of claims 1 to 5, further comprising at least partly enclosing said length of the tube in a vessel (54), and conducting said heating in a gaseous environment in the vessel (54) having at least one of a gaseous pressure and an oxygen concentration greater than normal atmospheric pressure and oxygen concentration.

7. A method as claimed in claim 6, wherein said gaseous environment substantially comprises oxygen and inert gas.

## Patentansprüche

1. Verfahren zum Verfestigen von Kernbrennstäben (20) für einen Druckwasserreaktor gegen Scheuerschäden durch Teilchen, wobei die Brennstäbe (20) in einem Brennelement (34) mit einem Stützgitter (32) mit die Stäbe (20) in einer Stabhalteposition (26) längs der Brennstäbe (20) ergreifenden Aufnahmen aufweist, jeder der Brennstäbe (20) spaltbaren Brennstoff in einem Hüllrohr enthält, das einen aus einer Zirkoniumlegierung bestehenden länglichen Hohlschaft (28) bildet, und das Brennelement (34) die Stäbe (20) parallel zueinander und mit ihrer Längsrichtung in Richtung einer Kühlmittelströmung abstützt, wobei das Verfahren umfaßt:
Bilden eines Oberflächenüberzugs (22) aus Zirkoniumoxid auf einer Außenfläche des Rohrs (28) einschließlich eines Teils (24) auf der Außenfläche des Rohrs (28) im Bereich der Gitterstützposition (26), der wesentlich dicker als der Zirkoniumoxid-Oberflächenüberzug (22) entlang der restlichen Länge des Rohrs (28) ist, wodurch das Rohr (28) gegen Aufschlag von Teilchen nahe der Gitterstützposition (26) verfestigt wird, und wobei dieser Überzugsbildungsschritt das Erwärmen der genannten Rohrlänge (28) bis zu einer Stunde in einer sauerstoffhaltigen Atmosphäre bei einer Temperatur von 600°C bis 670°C (1100 bis 1600° Fahrenheit) umfaßt.

2. Verfahren nach Anspruch 1, welches das Bilden des dickeren Teils (24) auf der Außenfläche des Rohrs (20) entlang einer von der Gitterstützposition (26) zu einem Ende (42) des Rohrs (28) verlaufenden Länge umfaßt.

3. Verfahren nach Anspruch 1 oder 2, welches das Formen des dickeren Teils (24) mit einer Dicke von 2 bis 15 Mikrometer umfaßt.

4. Verfahren nach Anspruch 1, welches das Bilden des dickeren Teils (24) über eine Länge von 10,16 bis 20,32 cm (4 bis 8 Zoll) zwischen der Gitterstützposition (26) und dem Ende (42) des Rohrs (20) umfaßt.

5. Verfahren nach einem der Ansprüche 1 bis 4, wobei das Erwärmen durch mindestens eines der Verfahren elektromagnetische Induktionsheizung, Ofenheizung, elektrische Widerstandsheizung und Laserstrahlungsheizung erfolgt.

6. Verfahren nach einem der Ansprüche 1 bis 5, das weiter das mindestens teilweise Umschließen der Rohrlänge in einem Behälter (54) und das Durchführen der Erwärmung in einer gasförmigen Umgebung in Behälter (54) umfaßt, wobei mindestens einer der Parameter Gasdruck und Sauerstoffkonzentration größer als der normale Atmosphärendruck bzw. die normale Sauerstoffkonzentration ist.

7. Verfahren nach Anspruch 6, wobei die gasförmige Umgebung im wesentlichen Sauerstoff und Inertgas enthält.

## Revendications

1. Procédé de renforcement de barreaux de combustible nucléaire (20) destinés à un réacteur à eau pressurisée contre la corrosion par frottement de débris, les barreaux de combustible (20) devant être montés dans un assemblage combustible (24) comprenant une grille de support (32) avec des éléments de soutien qui portent contre les barreaux (20) en une position de support de barreau (26) le long des barreaux de combustible (20), chacun des barreaux de combustible (20) comprenant un combustible fissile placé dans un tube de gainage qui définit une longue tige creuse (28) faite d'un alliage de zirconium, l'assemblage combustible (34) maintenant les barreaux (20) parallèles les uns aux autres et allongés dans la direction d'écoulement du caloporteur,
le procédé comprenant la formation d'un revêtement de surface (22) en oxyde de zirconium sur une surface extérieure du tube (28), avec une partie (24) sur la surface extérieure du tube (28), dans la région de la position de support de barreau (26), qui est sensiblement plus épaisse que le revêtement de surface (22) en oxyde de zirconium le long de la partie restante de la longueur du tube (28), si bien que le tube (28) est renforcé contre les chocs par des débris à proximité de la position de support de barreau (26), et dans lequel ladite étape de formation comprend le chauffage de ladite longueur de tube (28) pendant jusqu'à une heure dans une atmosphère contenant de l'oxygène, à une température de 600 à 870°C (1100 à 1600°F).

2. Procédé selon la revendication 1, comprenant la formation de la partie plus épaisse (24) sur la surface extérieure du tube (20) sur une longueur allant de la position de support de barreau (26) à une extrémité (42) du tube (28).

3. Procédé selon la revendication 1 ou 2, comprenant la formation de la partie plus épaisse (24) avec une épaisseur de 2 à 15 microns.

4. Procédé selon la revendication 2, comprenant la formation de la partie plus épaisse (24) sur une longueur de 10,16 à 20,32 cm (quatre à huit pouces) entre la position de support de barreau (26) et l'extrémité (42) du tube (20).

5. Procédé selon l'une quelconque des revendications 1 à 4, dans lequel ledit chauffage est obtenu par l'une au moins des techniques suivantes : chauffage par induction électromagnétique, chauffage au four, chauffage par résistance électrique et chauffage par application d'un rayonnement laser.

6. Procédé selon l'une quelconque des revendications 1 à 5, comprenant en outre l'enfermement au moins partiel dudit tronçon de tube dans une cuve (54) et la réalisation dudit chauffage dans un environnement gazeux dans la cuve (54) où l'une au moins de la pression gazeuse et de la concentration en oxygène est supérieure à la pression atmosphérique et à la concentration en oxygène normales.

7. Procédé selon la revendication 6, dans lequel ledit environnement gazeux comprend essentiellement de l'oxygène et un gaz inerte.
